# EUROPÄISCHE PATENTSCHRIFT

(11) **EP 2 745 339 B1**
(45) Veröffentlichungstag und Bekanntmachung des Hinweises auf die Patenterteilung: **14.03.2018**
(21) Anmeldenummer: 12751033.7
(22) Anmeldetag: 10.08.2012
(51) Int. Cl.: H01M 2/36, H01M 10/10, H01M 2/16

(54) **VERFAHREN ZUR HERSTELLUNG EINES MIT EINEM FLÜSSIGEN ELEKTROLYTEN GEFÜLLTEN AKKUMULATORS UND AKKUMULATOR**
METHOD FOR PRODUCING A BATTERY FILLED WITH A LIQUID ELECTROLYTE AND BATTERY
PROCÉDÉ DE FABRICATION D'UN ACCUMULATEUR REMPLI D'UN ÉLECTROLYTE LIQUIDE ET ACCUMULATEUR

(30) Priorität: 17.08.2011 DE 102011110479
(43) Veröffentlichungstag der Anmeldung: 25.06.2014
(73) Patentinhaber: Johnson Controls Autobatterie GmbH & Co. KGaA, 30419 Hannover (DE)
(72) Erfinder: MEISSNER, Eberhard, 31515 Wunstorf (DE)
(74) Vertreter: Trinks, Ole
(86) Internationale Anmeldenummer: PCT/EP2012/065670
(87) Internationale Veröffentlichungsnummer: WO 2013/024020

(56) Entgegenhaltungen:
- EP-A1- 0 504 573
- EP-A2- 0 207 742
- WO-A2-2010/053256
- CH-A5- 653 809
- DE-U1-202009 016 112
- GB-A- 665 065
- GB-A- 690 088
- US-A- 3 249 132
- US-A- 5 201 924

## Beschreibung

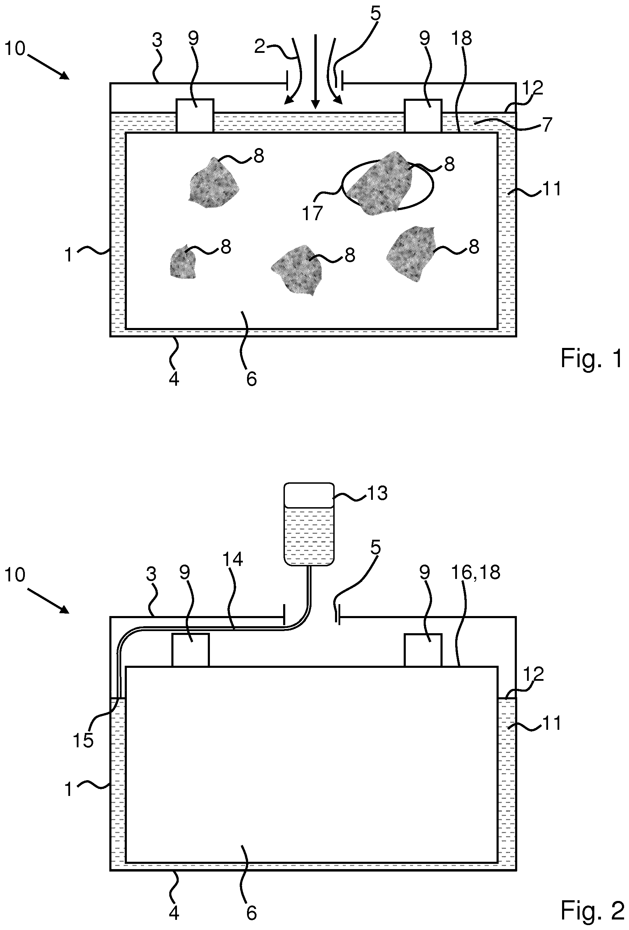

Die Erfindung betrifft ein Verfahren zur Herstellung eines mit einem flüssigen Elektrolyten gefüllten Akkumulators gemäß dem Oberbegriff des Anspruchs 1. Die Erfindung betrifft ferner einen Akkumulator gemäß dem Anspruch 10. Die Erfindung betrifft das Gebiet von Akkumulatoren, die mit einem flüssigen Elektrolyten zu befüllen sind, wie z. B. Blei-Säure-Batterien, wie sie z. B. als Starterbatterien für Kraftfahrzeuge verwendet werden. Ein solcher Akkumulator ist z.B. aus der US 5,356,733 bekannt. Bei der Herstellung eines solchen Akkumulators erfolgt der Befüllvorgang mit dem flüssigen Elektrolyten gemäß der anhand der Figur 1 dargestellten Vorgehensweise. Die Befüllung erfolgt durch eine Einfüllöffnung 5, die an einer Oberseite 3 des Gehäuses 1 oder zumindest oberhalb der Mitte des Gehäuses 1 angeordnet ist. Der Akkumulator 10 steht mit seiner Unterseite 4 auf einer horizontalen Fläche. Der Innenraum des Gehäuses 1 wird durch ein Vakuum evakuiert. Durch das Vakuum wird eine vorbestimmte Menge an flüssigem Elektrolyten 2 in das Gehäuse 1 durch die Einfüllöffnung 5 eingesaugt. In Folge der schnellen Befüllung mit dem flüssigen Elektrolyten bildet sich oberhalb der in dem Gehäuse 1 vorgesehenen Batterieelektroden 6 eine Art "See", d. h. eine Ansammlung 7 von flüssigem Elektrolyten 2, die sich dann weiter zwischen den Batterieelektroden 6 verteilt und in Folge der Schwerkraft zur Unterseite 4 hin fließt. Hierbei kommt es vor, dass durch den einströmenden flüssigen Elektrolyten 2 Gase zwischen den Batterieelektroden 6 bzw. in einem Separatormaterial, das die Batterieelektroden 6 umgibt, eingeschlossen werden und nicht oder nur schlecht entweichen können.

Insbesondere bei sehr feinfaserigem Separatormaterial ist das Entweichen des Gases durch Kapillareffekte zusätzlich erschwert. Aber auch bei anders aufgebauten Batterieelektroden oder anderen Umhüllungen der Batterieelektroden tritt der beschriebene Effekt auf.

Bei den eingeschlossenen Gasen kann es sich einerseits um trotz der Evakuierung verbliebene Luftmengen aus der Umgebung handeln. Zusätzlich kann sich beim Befüllen einer Blei-Säure-Batterie mit dem flüssigen Elektrolyten in manchen Fällen relativ schnell Kohlenstoffdioxid bilden, das bei der zuvor beschriebenen Art der Befüllung ebenfalls nicht oder nur schlecht entweichen kann.

Die im Bereich der Batterieelektroden verbleibenden Gasansammlungen sind unerwünscht, weil an sich eine vollständige Befüllung des Bereichs der Batterieelektroden mit dem flüssigen Elektrolyten beabsichtigt ist. Zudem tritt bei bestimmten Akkumulatortypen in Folge der eingeschlossenen Gasblasen eine Fleckenbildung am Separatormaterial ein, die ebenfalls nicht erwünscht ist. So können sich lösliche Substanzen abscheiden und am Separatormaterial sichtbar ablagern.

Aus der US 5,201,924 A ist ein weiteres Verfahren bzw. ein Akkumulator gemäß dem Stand der Technik bekannt. Der Erfindung liegt daher die Aufgabe zugrunde, ein Verfahren zur Herstellung eines mit einem flüssigem Elektrolyten gefüllten Akkumulators anzugeben, das bei einer kontinuierlichen Befüllung mit dem flüssigen Elektrolyten den Gaseinschluss in dem Gehäuse und eine eventuelle Fleckenbildung am Separatormaterial vermeidet oder zumindest deutlich verringert. Ferner soll ein entsprechender Akkumulator angegeben werden.

Die Aufgabe wird gelöst durch ein Verfahren nach Anspruch 1 zur Herstellung eines mit einem flüssigen Elektrolyten gefüllten Akkumulators, wobei der Akkumulator ein Gehäuse mit einer im Normalbetrieb des Akkumulators oben liegenden Oberseite und einer der Oberseite gegenüberliegenden Unterseite aufweist, wobei in dem Gehäuse Batterieelektroden angeordnet sind und das Gehäuse wenigstens eine Einfüllöffnung für den flüssigen Elektrolyten aufweist, die an der Oberseite des Gehäuses oder zumindest oberhalb der Mitte des Gehäuses angeordnet ist, wobei flüssiger Elektrolyt durch die wenigstens eine Einfüllöffnung derart zugeführt wird, dass zu keinem Zeitpunkt während des Einfüllvorgangs des flüssigen Elektrolyten die in Bezug auf die Wirkrichtung der Schwerkraft oberste Stelle der Batterieelektroden vollständig mit dem flüssigen Elektrolyten bedeckt ist.

Die Erfindung geht von einem Akkumulator mit einem Gehäuse mit wenigstens einer Einfüllöffnung für den flüssigen Elektrolyten aus. Es können auch mehrere Öffnungen vorgesehen sein, wobei während des Befüllvorgangs die übrigen Öffnungen ggf. verschlossen werden. Die wenigstens eine Einfüllöffnung für den flüssigen Elektrolyten ist an der Oberseite des Gehäuses angeordnet, z. B. in einem Deckelteil. Zumindest ist die Einfüllöffnung aber oberhalb der Mitte des Gehäuses angeordnet, d. h. oberhalb einer Ebene, die mittig zwischen der Oberseite und der Unterseite des Gehäuses gedacht ist. Vorgeschlagen wird, dass flüssiger Elektrolyt durch die wenigstens eine Einfüllöffnung derart zugeführt wird, dass zu keinem Zeitpunkt während des Einfüllvorgangs des flüssigen Elektrolyten die in Bezug auf die Wirkrichtung der Schwerkraft oberste Stelle der Batterieelektroden vollständig mit dem Elektrolyten bedeckt ist. Dies hat den Vorteil, dass beim Zuführen des flüssigen Elektrolyten wenigstens eine in Bezug auf die Wirkrichtung der Schwerkraft oberste Stelle der Batterieelektroden während des gesamten Einfüllvorgangs frei von flüssigem Elektrolyten gelassen wird. An dieser obersten Stelle können Gasansammlungen dann ungestört entweichen. Das entweichende Gas kann sich z. B. zunächst in einem oberhalb der obersten Stelle der Batterieelektroden gelegenen Gehäusebereich sammeln oder durch eine Öffnung des Gehäuses entweichen, z. B. durch die Einfüllöffnung oder eine andere Öffnung. Durch das erfindungsgemäße Verfahren wird die Bildung des eingangs erwähnten "Sees" auf der Oberfläche der Batterieelektroden vermieden, so dass für das austretende Gas immer ein freier Weg verbleibt. Damit kann ein Akkumulator ohne die unerwünschten Gaseinschlüsse bzw. mit deutlich verringerter Menge von Gaseinschlüssen hergestellt werden. Ein weiterer Vorteil des Verfahrens ist, dass eine kontinuierliche Befüllung des Akkumulators mit dem flüssigen Elektrolyten erfolgen kann, d. h. es muss nicht etwa eine Unterbrechung des Befüllvorgangs erfolgen, um eingeschlossenes Gas entweichen zu lassen. Dies hat wiederum den Vorteil, dass die Befüllung mit dem flüssigen Elektrolyten wie beim bekannten Verfahren relativ zügig erfolgen kann, was für einen industriellen Herstellungsprozess vorteilhaft ist. Bei dem Verfahren kann zusätzlich eine Evakuierung des Gehäuses vorgesehen werden, um den Einfüllvorgang zu unterstützen.

Ein weiterer Vorteil ist, dass die Befüllung des Gehäuses und damit die Benetzung der Batterieelektroden im Wesentlichen von deren Unterseite her erfolgt, obwohl die Einfüllöffnung weiter oben liegt. Das von der Flüssigkeitsfront verdrängte Gas wird nicht eingeschlossen, und es wird ein trockener Entgasungsweg freigehalten. Dies führt vorteilhaft zu einer relativ homogenen Befüllung des Akkumulators und einer homogenen Benetzung der Batterieelektroden. Eine Entstehung von weniger gut befüllten Stellen des Akkumulators wird somit vermieden. Hierdurch kann ein homogenes Verhalten des Akkumulators und damit im Ergebnis eine bessere Leistungsfähigkeit des Akkumulators erzielt werden.

Als oberste Stelle der Batterieelektroden kommt bei einem horizontal stehenden Akkumulator die zur Oberseite des Gehäuses hin gewandte Oberkante der Batterieelektroden in Betracht, die bei dem anhand der Figur 1 dargestellten, bekannten Verfahren mit dem flüssigen Elektrolyten überdeckt ist. Im Falle eines nicht horizontal stehenden Akkumulators kann die oberste Stelle der Batterieelektroden in Bezug auf die Wirkrichtung der Schwerkraft z. B. eine nach oben stehende Ecke der Batterieelektroden sein.

Die Erfindung eignet sich für alle Arten von Akkumulatoren, die mit einem flüssigen Elektrolyten zu befüllen sind, unabhängig von der Art und Ausgestaltung der Batterieelektroden. Die Erfindung eignet sich sowohl für Batterieelektroden, die mit einem Separatormaterial vollständig umgeben sind, d. h. sich in einer durch das Separatormaterial nach Art einer Tasche gebildeten Umhüllung befinden, als auch für Batterieelektroden, bei denen andersartige Separatoren verwendet werden. Die Erfindung eignet sich für Batterieelektroden, bei denen das Separatormaterial über die Kanten des Batteriegitters hinaus steht, was z. B. bei der taschenartigen Ausbildung von Separatoren regelmäßig der Fall ist, als auch für Batterieelektroden mit nicht über das Batteriegitter hinaus stehenden Separatoren. Insofern wird im Sinne der vorliegenden Anmeldung der Separator als Teil der Batterieelektrode verstanden. Sofern der Separator über das Gitter der Batterieelektrode hinaus steht, ist es vorteilhaft, wenn als oberste Stelle der Batterieelektroden, die während des Einfüllvorganges des flüssigen Elektrolyten von dem flüssigen Elektrolyten freizuhalten ist, die jeweils oberste Stelle der herausstehenden Separatoren der Batterieelektrode gilt. Sofern eine Vielzahl von Batterieelektroden zu einem sogenannten Batterieelektrodenstapel in einer Zelle des Akkumulators vorgesehen ist, d. h. eine Vielzahl von unmittelbar angrenzend nebeneinander angeordneten Batterieelektroden, so ist es vorteilhaft, die jeweils oberste Stelle des Batterieelektrodenstapels während des Einfüllvorganges des flüssigen Elektrolyten von dem flüssigen Elektrolyten freizuhalten.

Die Erfindung kann bei prismatischen Gehäusebauformen als auch bei anderen Gehäusebauformen, z. B. bei runden oder ovalen Gehäusen, eingesetzt werden.

Der Akkumulator kann als einzelliger oder mehrzelliger Akkumulator ausgebildet sein. Sofern der Akkumulator mehrzellig ausgebildet ist, so gelten die Ausführungen bezüglich des Gehäuses auch in Bezug auf einen jeweiligen Gehäuseteil des Akkumulatorgehäuses, der jeweils eine Zelle des Akkumulators umschließt. Im Falle eines einzelligen Akkumulators kann der entsprechende Gehäuseteil einer Zelle dementsprechend auch das gesamte Gehäuse des Akkumulators bilden. Bei einem mehrzelligen Akkumulator ist vorteilhaft vorgesehen, dass jede Zelle bzw. jedes Gehäuseteil einer Zelle wenigstens eine eigene Einfüllöffnung für den flüssigen Elektrolyten aufweist.

Die Befüllung des Akkumulators mit dem flüssigen Elektrolyten erfolgt geregelt. Gemäß der Erfindung wird der flüssige Elektrolyt durch eine Regelung dosiert in das Gehäuse eingefüllt. Dies hat den Vorteil, dass durch die Regelung sichergestellt werden kann, dass zu keinem Zeitpunkt während des Einfüllvorgangs des flüssigen Elektrolyten die in Bezug auf die Wirkrichtung der Schwerkraft oberste Stelle der Batterieelektroden vollständig mit dem Elektrolyten bedeckt ist.

Die Regelung kann als aktive oder passive Regelung ausgebildet sein. Bei einer aktiven Regelung ist ein Regler vorgesehen, z. B. in Form eines mechanischen oder elektronischen Reglers, dem eine Eingangsgröße, wie z. B. der aktuelle Füllstand des flüssigen Elektrolyten in dem Gehäuse, zugeführt wird. Der Regler regelt dann den Füllstand auf einen vorbestimmten Sollwert. Der Sollwert ist vorteilhaft derart festgelegt, dass die während des Einfüllvorgangs des flüssigen Elektrolyten in Bezug auf die Wirkrichtung der Schwerkraft oberste Stelle der Batterieelektroden zu keinem Zeitpunkt vollständig mit dem Elektrolyten bedeckt ist. Die Regelung kann auch passiv ausgeführt sein, z. B. im Falle der Befüllung mittels des nachfolgend noch erläuterten Befüllungsgefäßes über wenigstens einen länglichen Hohlkörper.

Gemäß einer vorteilhaften Weiterbildung der Erfindung wird flüssiger Elektrolyt durch die wenigstens eine Einfüllöffnung derart zugeführt, dass zu keinem Zeitpunkt die zur Oberseite weisenden Oberkanten der Batterieelektroden vollständig mit dem flüssigen Elektrolyten bedeckt sind. Dies hat den Vorteil, dass eine Befüllung des Akkumulators unter Verwendung bereits vorhandener Herstelleinrichtungen durchgeführt werden kann, bei denen der Akkumulator, wie in Figur 1 dargestellt, horizontal angeordnet ist. Neue oder geänderte Herstellvorrichtungen müssen dann nicht beschafft werden. Mit den bekannten Herstellvorrichtungen kann damit ein Akkumulator ohne die unerwünschten Gaseinschlüsse bzw. mit deutlich verringerter Menge von Gaseinschlüssen hergestellt werden.

Gemäß einer vorteilhaften Weiterbildung der Erfindung ist der Akkumulator während des Einfüllvorgangs des flüssigen Elektrolyten schräg oder auf die Seite gestellt. Dies hat den Vorteil, dass eine definierte Gasaustrittsstelle für den Befüllvorgang geschaffen werden kann, die relativ hoch liegt. Ein weiterer Vorteil ist, dass die erfindungsgemäße Befüllung des Akkumulators im Hinblick auf die eingesetzten Hilfsmittel, wie z. B. das noch zu beschreibende Befüllungsgefäß, oder die Geschwindigkeit des Befüllungsvorgangs weiter optimiert werden kann. Insbesondere kann eine schnellere Befüllung unter Vermeidung der unerwünschten Gaseinschlüsse realisiert werden, sogar wenn eine ungeregelte Befüllung durchgeführt wird. Bei der Schrägstellung des Akkumulators kann z. B. die Unterseite des Gehäuses gegenüber einer horizontalen Fläche um wenigstens 10° geneigt sein, oder um wenigstens 30° oder in einem Bereich von 45 bis 135°. Vorteilhaft ist z. B. eine Neigung um etwa 30°. Ebenfalls vorteilhaft ist eine Neigung um 90°, was im Ergebnis einem auf die Seite stellen des Akkumulators bzw. des Gehäuses entspricht.

Gemäß einer vorteilhaften Weiterbildung der Erfindung ist nach dem Einfüllvorgang des flüssigen Elektrolyten eine Standzeit des Akkumulators vorgesehen, während der der Akkumulator weiterhin schräg oder auf die Seite gestellt ist. Die Standzeit stellt eine Art Ruhezeit dar, während der sich der flüssige Elektrolyt gleichmäßig verteilen kann und verbliebenes Gas entweichen kann. Gemäß einer vorteilhaften Weiterbildung der Erfindung wird die Schrägstellung des Akkumulators im Verlauf der Standzeit reduziert. Nach Ablauf der Standzeit befindet sich der Akkumulator dann wieder in einer horizontalen Lage.

Gemäß einer vorteilhaften Weiterbildung der Erfindung erfolgt die Schrägstellung des Akkumulators bei einem Akkumulator, bei dem der Gehäuseteil, der eine Zelle des Akkumulator umschließt, eine längere und eine kürzere Gehäuseseite aufweist, wobei die längere Gehäuseseite länger als die kürzere Gehäuseseite ist, über die kürzere Gehäuseseite des Gehäuseteils. Im Fall eines einzelligen Akkumulator kann das Gehäuseteil auch das gesamte Gehäuse bilden. Die Neigung wird somit um eine Achse senkrecht zur längeren Seite hergestellt. Dies hat den Vorteil, dass der Höhenunterschied zwischen der tiefer liegenden Seite und der höher liegenden Seite des Gehäuseteils maximiert werden kann. Es ist auch möglich, die Schrägstellung über die längere Gehäuseseite oder zugleich über die kürzere und die längere Gehäuseseite vorzusehen.

Gemäß einer vorteilhaften Weiterbildung der Erfindung nimmt ein die Batterieelektroden umhüllendes, Flüssigkeit aufsaugendes Material während des Einfüllvorgangs des flüssigen Elektrolyten den flüssigen Elektrolyten auf. Das Flüssigkeit aufsaugende Material nimmt vorteilhaft den flüssigen Elektrolyten dauerhaft auf und hält diesen auch nach dem Einfüllvorgang. Die Erfindung eignet sich daher insbesondere auch für Akkumulatoren mit feinfaserigem Separatormaterial, das die Batterieelektroden umhüllt. Das Separatormaterial saugt dann den flüssigen Elektrolyten auf. Bei dem Flüssigkeit aufsaugenden Material kann es sich um eine poröse Matte aus Mikro-Glasfasern handeln, wobei auch ein gewisser Anteil von Polymerfasern enthalten sein kann. Das Verfahren eignet sich insbesondere für Akkumulatoren in Form von AGM-Batterien.

Gemäß einer vorteilhaften Weiterbildung der Erfindung wird ein den flüssigen Elektrolyten enthaltendes Befüllungsgefäß über wenigstens einen länglichen Hohlkörper, z. B. ein Schlauch oder ein Rohr, mit dem Gehäuse verbunden, indem der längliche Hohlkörper durch die wenigstens eine Einfüllöffnung in das Innere des Gehäuses bis zu einer Position geführt wird, die in Bezug auf die Wirkrichtung der Schwerkraft tiefer als die wenigstens eine Einfüllöffnung liegt. Der flüssige Elektrolyt tritt dann an einer Auslassöffnung des länglichen Hohlkörpers aus diesem aus und fließt in das Gehäuseinnere des Akkumulators. Dies hat den Vorteil, dass die erfindungsgemäße Befüllung des Akkumulators mit einfachen und kostengünstigen Hilfsmitteln durchgeführt werden kann. Das Befüllungsgefäß kann z. B. als einfache Kunststoffflasche oder als Beutel ausgeführt sein. Im Fall eines mehrzelligen Akkumulators können mehrere Befüllungsgefäße nebeneinander in einer Halterung befestigt werden, so dass eine parallele Befüllung der einzelnen Akkumulatorzellen über ein einer jeweiligen Akkumulatorzelle zugeordnetes Befüllungsgefäß durchgeführt werden kann. Ein weiterer Vorteil ist, dass das Befüllungsgemäß bereits mit einer definierten Menge an flüssigem Elektrolyten vorab bereitgestellt werden kann, so dass der eigentliche Einfüllvorgang nur noch wenige Handgriffe erfordert, die keine besonders hohe Qualifikation erfordern. Es ist lediglich jede Akkumulatorzelle mit einem Befüllungsgefäß über den jeweiligen länglichen Hohlkörper zu verbinden. Der Einfüllvorgang kann dann durch die Wirkung der Schwerkraft erfolgen, d. h. der flüssige Elektrolyt fließt schwerkraftbedingt aus dem Befüllungsgefäß über den länglichen Hohlkörper in das Gehäuse des Akkumulators. Dieser Vorgang ist zudem gut automatisierbar.

Die Zudosierung der Flüssigkeitsmenge kann dann z. B. durch geeignete Wahl des Durchflussquerschnitts des länglichen Hohlkörpers oder durch ein Dosierventil an dem Befüllungsgefäß oder dem länglichen Hohlkörper erfolgen. Das Befüllungsgefäß kann z.B. eine Druckausgleichsöffnung aufweisen, durch die Luft in das Befüllungsgefäß nachströmen kann. Das Befüllungsgefäß kann die Druckausgleichsöffnung z. B. an der Oberseite aufweisen.

Gemäß einer vorteilhaften Weiterbildung der Erfindung ist das Befüllungsgefäß im Übrigen geschlossen ausgebildet, d. h. die Auslassöffnung des länglichen Hohlkörpers stellt die einzige Öffnung dar. Dies hat den Vorteil, dass eine passive Regelung der dosierten Zuführung des flüssigen Elektrolyten auf kostengünstige Weise realisiert werden kann. Durch den länglichen Hohlkörper läuft nur so lange der flüssige Elektrolyt in das Gehäuse, bis die Auslassöffnung durch den Elektrolytpegel in dem Gehäuse bedeckt wird und kein Druckausgleich mehr mit dem Befüllungsgefäß stattfinden kann. Das sich in dem Befüllungsgefäß dann bildende Vakuum verhindert weiteres Zuströmen des Elektrolyten in das Gehäuse, bis der Elektrolytpegel im Gehäuse wieder abgesunken ist und die Auslassöffnung freigibt. Durch die Einstellung einer gewünschten Position der Auslassöffnung des länglichen Hohlkörpers in dem Gehäuse des Akkumulators kann somit ein gewünschter Elektrolytpegel eingestellt und während des gesamten Befüllungsvorgangs beibehalten werden, der für einen ausreichenden Gasaustritt günstig ist. Insbesondere bei einem Akkumulator mit Batterieelektroden, die von Flüssigkeit aufsaugendem Material umhüllt sind, ergibt sich durch das Aufsaugen der Flüssigkeit und Kapillareffekte eine vollständige Benetzung der Batterieelektroden mit dem Elektrolyten auch oberhalb des auf diese Weise geregelten Elektrolytpegels, so dass der geregelte Elektrolytpegel relativ niedrig festgelegt werden kann, was wiederum vorteilhaft für den Gasaustritt an der oberen Stelle der Batterieelektroden ist. Die genannte Weiterbildung ist insbesondere vorteilhaft, wenn der längliche Hohlkörper im Verlauf von dem Befüllungsgefäß zu der Auslassöffnung des länglichen Hohlkörpers ein durchgehendes Gefälle aufweist.

Gemäß einer vorteilhaften Weiterbildung der Erfindung ist eine Auslassöffnung des länglichen Hohlkörpers in Bezug auf die Wirkrichtung der Schwerkraft tiefer gelegen als die in Bezug auf die Wirkrichtung der Schwerkraft oberste Stelle der Batterieelektroden.

Gemäß einer vorteilhaften Weiterbildung der Erfindung weist der längliche Hohlkörper zwei voneinander getrennte Kanäle auf, wobei ein erster Kanal für die Elektrolytzufuhr in das Gehäuse verwendet wird und ein zweiter Kanal für eine Luftzufuhr in das Befüllungsgefäß verwendet wird. Dies hat den Vorteil, dass durch die zwei voneinander getrennten Kanäle ein definierter Druckausgleich in dem Befüllungsgefäß realisiert werden kann und zugleich die zuvor erwähnte passive Regelung des Elektrolytpegels erfolgen kann. Ein weiterer Vorteil ist, dass der längliche Hohlkörper nicht unbedingt von dem Befüllungsgefäß zu der Auslassöffnung ein durchgehendes Gefälle haben muss, sondern auch z. B. einen nach oben weisenden Bogen aufweisen kann. Hierdurch wird die Handhabung des Befüllungsgefäßes weiter vereinfacht. Vorteilhaft kann z. B. der erste Kanal im Wesentlichen in der gleichen Höhenlage in Bezug auf die Wirkrichtung der Schwerkraft enden wie der zweite Kanal. Dies hat den Vorteil, dass bei dem Druckausgleich in dem Befüllungsgefäß eine geringere Blasenbildung erfolgt. Ein weiterer Vorteil ist, dass der erste Kanal für die Elektrolytzufuhr an einer tieferen Stelle enden kann als der zweite Kanal für die Luftzufuhr. Dies hat den Vorteil, dass der Pegelstand, auf den der Elektrolytpegel geregelt wird, durch die höher liegende Luftansaugöffnung des zweiten Kanals bestimmt wird, während die tiefer liegende Auslassöffnung des ersten Kanals immer in die Elektrolytflüssigkeit eingetaucht ist. Hierdurch ist eine besonders homogene Elektrolytzufuhr in das Gehäuse ohne Blasenbildung in dem Gehäuse realisierbar.

Gemäß einer vorteilhaften Weiterbildung der Erfindung ist eine Auslassöffnung des ersten Kanals im Wesentlichen auf der gleichen Höhe innerhalb des Gehäuses angeordnet wie eine Luftansaugöffnung des zweiten Kanals.

Die Erfindung betrifft ferner einen Akkumulator mit einem Gehäuse mit einer im Normalbetrieb des Akkumulators oben liegenden Oberseite und einer der Oberseite gegenüberliegenden Unterseite, mit Batterieelektroden in dem Gehäuse, von denen wenigstens eine Batterieelektrode von Separatormaterial umgeben sind, und wenigstens einer Einfüllöffnung für den flüssigen Elektrolyten, die an der Oberseite des Gehäuses oder zumindest oberhalb der Mitte des Gehäuses angeordnet ist, und mit eingefülltem flüssigen Elektrolyten, dadurch gekennzeichnet, dass das Separatormaterial frei von Flecken ist oder die Fleckengröße pro Flecken 2 cm² oder 3% der gesamten Separatorfläche einer Seite der Batterieelektroden nicht überschreitet. Der Akkumulator kann z. B. nach einem der zuvor erläuterten Verfahren hergestellt sein.

Die Erfindung wird nachfolgend anhand von Ausführungsbeispielen unter Verwendung von Zeichnungen näher erläutert.

Es zeigen:
- Figur 1: - einen Akkumulator, bei dem ein Einfüllvorgang nach dem Stand der Technik durchgeführt wird, und
- Figuren 2 - 4: - jeweils einen Akkumulator, bei dem ein Einfüllvorgang erfindungsgemäß erfolgt und
- Figur 5: - einen Akkumulator mit einem Befüllungsgefäß und
- Figur 6: - eine weitere Ausführungsform eines Befüllungsgefäßes.

In den Figuren werden gleiche Bezugszeichen für einander entsprechende Elemente verwendet.

Die Figur 1 zeigt einen Akkumulator 10, bei dem flüssiger Elektrolyt 2 gemäß dem eingangs erläuterten Stand der Technik zugeführt wird. Der flüssige Elektrolyt 2 wird unter Vakuumeinfluss durch die Einfüllöffnung 5 in das Gehäuse 1 eingefüllt, so dass sich die eingangs bereits erwähnte Flüssigkeitsansammlung 7 oberhalb der Batterieelektroden 6 ergibt. Der in dem Gehäuse 1 bereits befindliche flüssige Elektrolyt 11 weist dabei einen Pegelstand 12 auf. Die Batterieelektroden 6, die in den Figuren zusätzlich mit Anschlussfahnen 9 zur elektrischen Kontaktierung dargestellt sind, sind mit einem faserigen Separatormaterial umhüllt. Bei dem Einfüllvorgang gemäß Figur 1 verbleiben Gasblasen 17 im Bereich der Batterieelektroden, z. B. im Separatormaterial. Durch entsprechende Reaktionen bilden sich im Separatormaterial flächige Flecken 8 aus, und zwar in etwa an denjenigen Stellen, an denen sich die Gasblasen 17 gebildet haben.

Die Figur 2 zeigt einen Akkumulator 10, bei dem flüssiger Elektrolyt durch eine passive Regelung dosiert zugeführt wird. Der Akkumulator 10 weist ein Gehäuse 1 mit einer im Normalbetrieb des Akkumulators 10 oben liegenden Oberseite 3 und einer der Oberseite 3 gegenüber liegenden Unterseite 4 auf. Als Normalbetrieb sei die spezifikationsgemäße Lage eines Akkumulators bezeichnet, die im Wesentlichen einer horizontalen Lage entspricht, wobei geringfügige Abweichungen von der horizontalen Lage zulässig sind. Der Akkumulator 10 weist im Inneren des Gehäuses 1 Batterieelektroden 6 auf, die von einem Flüssigkeit aufsaugenden Separatormaterial umhüllt sind. Die Batterieelektroden 6 weisen die Anschlussfahnen 9 auf. Der Akkumulator 10 befindet sich bei dem Ausführungsbeispiel gemäß Figur 2 in einer horizontalen Lage. Dargestellt ist ferner ein Befüllungsgefäß 13, z. B. in der Form einer Flasche oder eines Beutels. Das Befüllungsgefäß 13 ist mit einem länglichen Hohlkörper 14 verbunden, das im dargestellten Ausführungsbeispiel als Schlauch ausgebildet ist. Der Schlauch 14 ist durch die Einfüllöffnung 5 bis zu einem gewünschten Pegelstand 12 des flüssigen Elektrolyten 11 in dem Gehäuse 1 geführt. Der Schlauch 14 endet mit einer Auslassöffnung 15, aus der der flüssige Elektrolyt aus dem Schlauch 14 austritt. Das Befüllungsgefäß 13 ist mit dem flüssigen Elektrolyten gefüllt. Das Befüllungsgefäß 13 wird an einer Halterungseinrichtung, die nicht dargestellt ist, gehalten. Das Befüllungsgefäß 13 ist im Übrigen geschlossen ausgebildet. Durch die Wahl der Position der Auslassöffnung 15, die etwas unterhalb der Oberkante 18 der Batterieelektroden 6 liegt, wird ein Elektroytpegel geregelt beibehalten, der ebenfalls unterhalb der Oberkante 18 der Batterieelektroden 6 liegt. Hierdurch bleibt die Oberkante 18 der Batterieelektroden 6 frei von dem flüssigen Elektrolyten, so dass Gas nach oben hin entweichen kann.

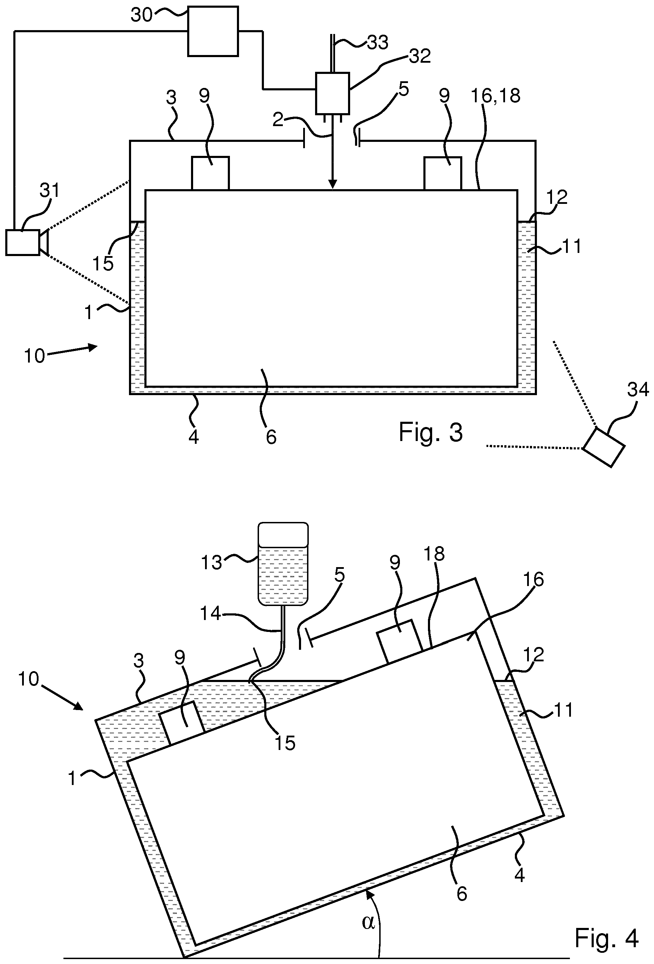

Die Figur 3 zeigt einen Akkumulator 10 während des Einfüllvorgangs des flüssigen Elektrolyten. Zur dosierten Zuführung des flüssigen Elektrolyten ist eine aktive Regelung vorgesehen, die durch eine Regelungseinrichtung 30, 31, 32 durchgeführt wird. Die Regelungseinrichtung 30, 31, 32 weist einen Regler 30, einen Sensor 31 sowie einen Aktor 32 auf. Der Regler 30 kann z. B. in Form eines elektronischen Reglers ausgeführt sein, z. B. als elektronische Schaltung mit einem Mikroprozessor, der eine entsprechende Programmierung zur Durchführung der Regelungsfunktion aufweist. Der Sensor 31 ist zur Erfassung des Pegelstands 12 eingerichtet. Der Sensor 31 kann auf unterschiedliche Weise realisiert werden, z. B. in Form einer in Figur 3 dargestellten elektronischen Kamera, die Bilder des Akkumulators 10 von einer Gehäuseseite her aufnimmt, oder als an der Oberseite 3 des Gehäuses 1 angebrachter Ultraschallsensor, der den Pegelstand 12 berührungslos erfasst, oder als mechanischer Sensor, z. B. mit einem Schwimmer. In der in Figur 3 dargestellten Ausführungsform erfasst der als Kamera 31 ausgebildete Sensor auf optischem Wege den Pegelstand 12. Hierzu ist das Gehäuse 1 zumindest an der von der Kamera 31 erfassten Seite transparent ausgebildet, so dass durch Verarbeitung der von der Kamera 31 erfassten Bilder der Pegelstand 12 ermittelt werden kann. Zur Verbesserung des Kontrasts bei der Bilderfassung kann z. B. zusätzlich eine Lichtquelle 34 vorgesehen sein, die den Akkumulator 10 mit Licht anstrahlt. Die Lichtquelle 34 kann z. B. farbiges Licht abgeben. Hierdurch wird der Kontrast zwischen dem mit dem Elektrolyten 11 befüllten Bereich des Akkumulators 10 und dem nicht mit dem Elektrolyten 11 befülltem Bereich verstärkt, so dass sich eine verbesserte Bilderfassung durch die Kamera 31 ergibt. Die Kamera 31 kann auch als Wärmebildkamera ausgebildet sein, oder es kann ein Temperaturfühler vorgesehen sein. In diesem Fall kann der Pegelstand 12 durch eine Temperaturmessung ermittelt werden, wobei darauf zu achten ist, dass sich die Temperatur des eingefüllten Elektrolyten 11 von der Temperatur des Gehäuses 1 unterscheidet. Dies erlaubt eine Ermittlung des Pegelstands 12 auch bei vollständig intransparenten Gehäusen.

Der Aktor 32 kann als ein elektrisch betätigbares Dosierventil ausgebildet sein, das über einen Zuführkanal 33 zugeführten flüssigen Elektrolyten dosiert durch die Einfüllöffnung 5 in das Gehäuse 1 abgibt. Der Regler 30 wertet die von dem Sensor 31 abgegebenen Daten aus, bestimmt daraus einen Istwert des Pegelstands 12, vergleicht diesen mit einem Sollwert und steuert den Aktor 32 derart, dass die zufließende Elektrolytmenge 2 nicht zu groß wird, so dass der Istwert des Pegelstands 12 den Sollwert nicht überschreitet.

Die Figur 4 zeigt einen Akkumulator 10, der während des Einfüllvorgangs des flüssigen Elektrolyten schräg gestellt ist. Wie erkennbar ist, wird ein Winkel α zwischen der Horizontalen und der Unterseite 4 des Gehäuses 1 gebildet. Durch die Schrägstellung entsteht ein größerer Abstand der in diesem Zustand in Bezug auf die Wirkrichtung der Schwerkraft obersten Stelle 16 der Batterieelektroden, die in diesem Fall nicht von der Oberkante 18 der Batterieelektroden gebildet wird. Die Schrägstellung oder ein auf die Seite stellen des Akkumulators während des Einfüllvorgangs ermöglicht eine relativ schnelle Befüllung mit dem flüssigen Elektrolyten, selbst wenn die Elektrolytzufuhr nicht geregelt wird. Allerdings ist das Vorsehen einer Regelung zusätzlich vorteilhaft.

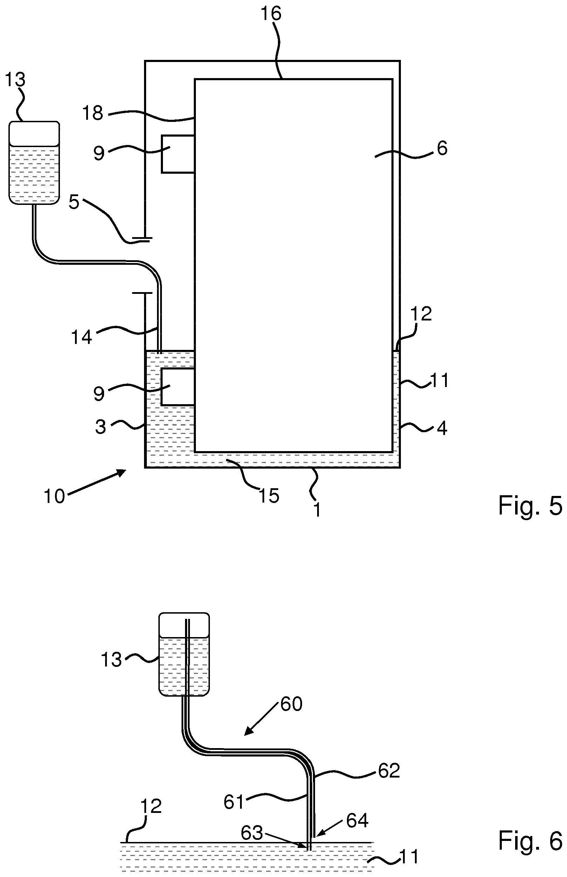

Die Figur 5 zeigt einen Akkumulator 10, der während des Einfüllvorgangs des flüssigen Elektrolyten auf die Seite gestellt ist. Erkennbar ist, dass in diesem Zustand sowohl die Oberseite 3 als auch die Unterseite 4 des Gehäuses 1 vertikal ausgerichtet sind. Im Ausführungsbeispiel gemäß Figur 5 wird zur Befüllung z. B. das anhand der Figur 2 bereits beschriebene Befüllungsgefäß 13 mit dem Schlauch 14 verwendet. Wie erkennbar ist, ergibt sich durch die seitliche Lagerung des Akkumulators 10 während des Einfüllvorgangs ein großer Abstand zwischen der in Wirkrichtung der Schwerkraft obersten Stelle 16 der Batterieelektroden 6 im Vergleich zu dem Pegelstand 12. Der Pegelstand 12 ist hierbei so zu wählen, dass er nicht höher liegt als die Einfüllöffnung 5. Dennoch ist eine vollständige Befüllung mit der vorgesehenen Menge an flüssigem Elektrolyten möglich, ohne dass aus der Einfüllöffnung 5 wieder flüssiger Elektrolyt heraus fließt. Dies wird durch das die Flüssigkeit aufsaugende Separatormaterial realisiert, das während des Einfüllvorgangs den flüssigen Elektrolyten aufnimmt. Durch Kapillarwirkung wird das Separatormaterial auch oberhalb der Einfüllöffnung 5 mit dem flüssigen Elektrolyten benetzt.

Die Figur 6 zeigt eine Ausführungsform eines Befüllungsgefäßes 13 mit einem länglichen Hohlkörper 60, der zwei voneinander getrennte Kanäle 61, 62 aufweist. Die Kanäle 61, 62 können z. B. in Form einzelner Schläuche oder Rohre gebildet sein, oder als voneinander getrennte Kanäle innerhalb desselben Schlauchs oder Rohrs. Ein erster Kanal 61 dient zur Elektrolytzufuhr in das Gehäuse 1. Der erste Kanal 61 endet an einer Auslassöffnung 63. Ein zweiter Kanal 62 dient zur Luftzufuhr in das Befüllungsgefäß 13. Der zweite Kanal 62 weist eine Luftansaugöffnung 64 auf. Die Luftansaugöffnung 64 kann z. B. auf gleicher Höhe wie die Auslassöffnung 63 angeordnet sein, d. h. etwa in Höhe des Pegelstands 12 des flüssigen Elektrolyten. Die Luftansaugöffnung 64 kann auch an einer höheren oder tieferen Stelle angeordnet sein. Günstig ist es, die Luftansaugöffnung 64 geringfügig oberhalb der Auslassöffnung 63 anzuordnen.

Der in den Figuren dargestellte Akkumulator 10 kann einzellig oder mehrzellig ausgebildet sein. Sofern er mehrzellig ausgebildet ist, zeigen die Figuren jeweils die Befüllung einer Zelle.

## Patentansprüche

1. Verfahren zur Herstellung eines mit einem flüssigen Elektrolyten (2, 11) gefüllten Akkumulators (10), wobei der Akkumulator (10) ein Gehäuse (1) mit einer im Normalbetrieb des Akkumulators (10) oben liegenden Oberseite (3) und einer der Oberseite (3) gegenüberliegenden Unterseite (4) aufweist, wobei in dem Gehäuse (1) Batterieelektroden (6) angeordnet sind und das Gehäuse (1) wenigstens eine Einfüllöffnung (5) für den flüssigen Elektrolyten (2, 11) aufweist, die an der Oberseite (3) des Gehäuses (1) oder zumindest oberhalb der Mitte des Gehäuses (1) angeordnet ist,
**dadurch gekennzeichnet, dass**
flüssiger Elektrolyt (2, 11) durch die wenigstens eine Einfüllöffnung (5) derart zugeführt wird, dass zu keinem Zeitpunkt während des Einfüllvorgangs des flüssigen Elektrolyten (2, 11) die in Bezug auf die Wirkrichtung der Schwerkraft oberste Stelle (16) der Batterieelektroden (6) vollständig mit dem flüssigen Elektrolyten (2, 11) bedeckt ist und wobei der flüssige Elektrolyt (2, 11) durch eine Regelung dosiert zugeführt wird.

2. Verfahren nach Anspruch 1, **dadurch gekennzeichnet, dass** flüssiger Elektrolyt (2, 11) durch die wenigstens eine Einfüllöffnung (5) derart zugeführt wird, dass zu keinem Zeitpunkt die zur Oberseite (3) weisenden Oberkanten (18) der Batterieelektroden (6) vollständig mit dem flüssigen Elektrolyten (2, 11) bedeckt sind.

3. Verfahren nach Anspruch 1 oder 2, **dadurch gekennzeichnet, dass** der Akkumulator (10) während des Einfüllvorgangs des flüssigen Elektrolyten (2, 11) schräg oder auf die Seite gestellt ist.

4. Verfahren nach einem der vorhergehenden Ansprüche, **dadurch gekennzeichnet, dass** ein die Batterieelektroden (6) umhüllendes, Flüssigkeit auf- saugendes Material während des Einfüllvorgangs des flüssigen Elektrolyten (2, 11) den flüssigen Elektrolyten (2, 11) aufnimmt.

5. Verfahren nach einem der vorhergehenden Ansprüche, **dadurch gekennzeichnet, dass** ein den flüssigen Elektrolyten (2, 11) enthaltendes Befüllungsgefäß (13) über wenigstens einen länglichen Hohlkörper (14, 60), z.B. ein Schlauch oder ein Rohr, mit dem Gehäuse (1) verbunden wird, indem der längliche Hohlkörper (14, 60) durch die wenigstens eine Einfüllöffnung (5) in das Innere des Gehäuses (1) bis zu einer Position geführt wird, die in Bezug auf die Wirkrichtung der Schwerkraft tiefer als die wenigstens eine Einfüllöffnung (5) liegt.

6. Verfahren nach Anspruch 5, **dadurch gekennzeichnet, dass** eine Auslassöffnung (15, 63) des länglichen Hohlkörpers (14, 60) in Bezug auf die Wirkrichtung der Schwerkraft tiefer als die in Bezug auf die Wirkrichtung der Schwerkraft oberste Stelle (16) der Batterieelektroden (6) liegt.

7. Verfahren nach Anspruch 5 oder 6, **dadurch gekennzeichnet, dass** der längliche Hohlkörper (14, 60) zwei voneinander getrennte Kanäle (61, 62) aufweist, wobei ein erster Kanal (61) für die Elektrolytzufuhr in das Gehäuse (1) verwendet wird und ein zweiter Kanal (62) für eine Luftzufuhr in das Befüllungsgefäß (13) verwendet wird.

8. Verfahren nach Anspruch 7, **dadurch gekennzeichnet, dass** eine Auslassöffnung (63) des ersten Kanals (61) im Wesentlichen auf der gleichen Höhe innerhalb des Gehäuses (1) angeordnet ist wie eine Luftansaugöffnung (64) des zweiten Kanals (62).

9. Verfahren nach einem der Ansprüche 5 bis 8, **dadurch gekennzeichnet, dass** das Befüllungsgefäß (13) im Übrigen geschlossen ausgebildet ist.

10. Akkumulator (10) mit einem Gehäuse (1), hergestellt in einem Verfahren nach einem der Ansprüche 1-9, mit einer im Normalbetrieb des Akkumulators (10) oben liegenden Oberseite (3) und einer der Oberseite (3) gegenüberliegenden Unterseite (4), mit Batterieelektroden (6) in dem Gehäuse (1), von denen wenigstens eine Batterieelektrode (6) von Separatormaterial umgeben ist, und wenigstens einer Einfüllöffnung (5) für den flüssigen Elektrolyten (2, 11), die an der Oberseite (3) des Gehäuses (1) oder zumindest oberhalb der Mitte des Gehäuses (1) angeordnet ist und mit eingefülltem flüssigen Elektrolyten (2, 11), **dadurch gekennzeichnet, dass** das Separatormaterial frei von Flecken (8) ist oder die Fleckengröße pro Flecken (8) 2 cm² oder 3% der gesamten Separatorfläche einer Seite der Batterieelektroden (6) nicht überschreitet.

## Claims

1. A method for producing an accumulator (10) filled with liquid electrolyte (2, 11), wherein the accumulator (10) comprises a housing (1) having an upper side (3) located at the top during the normal operation of the accumulator (10) and a lower side (4) situated opposite from the upper side (3), wherein battery electrodes (6) are disposed in the housing (1) and the housing (1) comprises at least one filling opening (5) for the liquid electrolyte (2, 11) arranged on the upper side (3) of the housing (1) or at least above the center of the housing (1),
**characterized in that**
liquid electrolyte (2, 11) is supplied through the at least one filling opening (9) such that at no time during the liquid electrolyte (2, 11) filling process does liquid electrolyte (2, 11) completely cover an uppermost point (16) of the battery electrodes (6) with respect to the effective direction of gravitational force, and wherein the supplying of the liquid electrolyte (2, 11) is controlled as a metered supply.

2. The method according to claim 1,
**characterized in that**
the liquid electrolyte (2, 11) is supplied through the at least one filling opening (9) such that at no time does the liquid electrolyte (2, 11) completely cover the upper edges (18) of the battery electrodes (6) facing the upper side (3).

3. The method according to claim 1 or 2,
**characterized in that**
the accumulator (10) is inclined or placed on its side during the liquid electrolyte (2, 11) filling process.

4. The method according to any one of the preceding claims,
**characterized in that**
an absorbent material surrounding the battery electrodes (6) absorbs the liquid electrolyte (2, 11) during the liquid electrolyte (2, 11) filling process.

5. The method according to any one of the preceding claims,
**characterized in that**
a filling vessel (13) containing the liquid electrolyte (2, 11) is connected to the housing (1) by means of at least one elongated hollow body (14, 60), e.g. a hose or a tube, by the elongated hollow body (14, 60) being guided through the at least one filling opening (5) to a position within the interior of the housing (1) which is lower with respect to the effective direction of gravitational force than the at least one filling opening (5).

6. The method according to claim 5,
**characterized in that**
an outlet opening (15, 63) of the elongated hollow body (14, 60) is at a lower position with respect to the effective direction of gravitational force than the uppermost point (16) of the battery electrodes (6).

7. The method according to claim 5 or 6,
**characterized in that**
the elongated hollow body (14, 60) exhibits two separated channels (61, 62), wherein a first channel (61) is used for supplying the electrolyte into the housing (1) and a second channel (62) is used for supplying air into the filling vessel (13).

8. The method according to claim 7,
**characterized in that**
an outlet opening (63) of the first channel (61) is at substantially the same height within the housing (1) as an air intake opening (64) of the second channel (62).

9. The method according to one of claims 5 to 8,
**characterized in that**
the filling vessel (13) is otherwise of entirely closed configuration.

10. An accumulator (10) comprising a housing (1) produced in a method in accordance with one of claims 1 to 9 having an upper side (3) located at the top during the normal operation of the accumulator (10) and a lower side (4) situated opposite from the upper side (3), battery electrodes (6) within said housing (1) from which at least one battery electrode (6) is surrounded by a separator material, and at least one filling opening (5) for the liquid electrolyte (2, 11) arranged on the upper side (3) of the housing (1) or at least above the center of the housing (1) and filled liquid electrolyte (2, 11),
**characterized in that**
the separator material is free of flakes (8) or the flake size per flake (8) does not exceed 2 cm³ or 3% of the entire separator area of one side of the battery electrodes (6).

## Revendications

1. Procédé de réalisation d'un accumulateur (10) rempli d'un électrolyte liquide (2, 11), dans lequel l'accumulateur (10) comprend un boîtier (1) ayant une face supérieure (3) située en haut pendant le fonctionnement normal de l'accumulateur (10) et ayant une face inférieure (4) opposée à la face supérieure (3), des électrodes de batterie (6) sont agencées dans le boîtier (1), et le boîtier (1) présente au moins une ouverture de remplissage (5) pour l'électrolyte liquide (2, 11) qui est disposée sur la face supérieure (3) du boîtier (1) ou au moins au-dessus du milieu du boîtier (1),
**caractérisé en ce que**
l'électrolyte liquide (2, 11) est alimenté à travers ladite au moins une ouverture de remplissage (5) de telle sorte qu'à aucun instant pendant l'opération de remplissage de l'électrolyte liquide (2, 11) l'emplacement (16) des électrodes de batterie (6) situé le plus en haut par rapport à la direction d'action de la gravité n'est complètement recouvert de l'électrolyte liquide (2, 11), et l'électrolyte liquide (2, 11) est alimenté en étant dosé par une régulation.

2. Procédé selon la revendication 1,
**caractérisé en ce que**
l'électrolyte liquide (2, 11) est alimenté à travers ladite au moins une ouverture de remplissage (5) de telle sorte qu'à aucun instant les arêtes supérieures (18) des électrodes de batterie (6), dirigées vers la face supérieure (3), ne sont complètement recouvertes de l'électrolyte liquide (2, 11).

3. Procédé selon la revendication 1 ou 2,
**caractérisé en ce que**
pendant l'opération de remplissage de l'électrolyte liquide (2, 11), l'accumulateur (10) est posé en oblique ou sur chant.

4. Procédé selon l'une des revendications précédentes,
**caractérisé en ce que**
pendant l'opération de remplissage de l'électrolyte liquide (2, 11), un matériau enveloppant les électrodes de batterie (6) et absorbant vis-à-vis des liquides absorbe l'électrolyte liquide (2, 11).

5. Procédé selon l'une des revendications précédentes,
**caractérisé en ce que**
un récipient de remplissage (13) contenant l'électrolyte liquide (2, 11) est relié au boîtier (1) par au moins un corps creux oblong (14, 60), par exemple un tuyau ou un tube, du fait que le corps creux oblong (14, 60) est introduit dans l'intérieur du boîtier (1) par ladite au moins une ouverture de remplissage (5) jusqu'à une position qui est située plus bas que ladite au moins une ouverture de remplissage (5) par rapport à la direction d'action de la gravité.

6. Procédé selon la revendication 5,
**caractérisé en ce que**
par rapport à la direction d'action de la gravité, une ouverture de sortie (15, 63) du corps creux oblong (14, 60) est située plus bas que l'emplacement (16) des électrodes de batterie (6) le plus haut par rapport à la direction d'action de la gravité.

7. Procédé selon la revendication 5 ou 6,
**caractérisé en ce que**
le corps creux oblong (14, 60) comprend deux canaux (61, 62) séparés l'un de l'autre, un premier canal (61) étant utilisé pour l'alimentation de l'électrolyte jusque dans le boîtier (1) et un second canal (62) étant utilisé pour une alimentation d'air jusque dans le récipient de remplissage (13).

8. Procédé selon la revendication 7,
**caractérisé en ce que**
une ouverture de sortie (63) du premier canal (61) est agencée à l'intérieur du boîtier (1) sensiblement à la même hauteur qu'une ouverture d'aspiration d'air (64) du second canal (62).

9. Procédé selon l'une des revendications 5 à 8,
**caractérisé en ce que**
le récipient de remplissage (13) est par ailleurs réalisé de façon fermée.

10. Accumulateur (10) comportant un boîtier (1), réalisé par un procédé selon l'une des revendications 1 à 9,
ayant une face supérieure (3) située en haut pendant le fonctionnement normal de l'accumulateur (10) et ayant une face inférieure (4) opposée à la face supérieure (3), comportant des électrodes de batterie (6) dans le boîtier (1) dont au moins une électrode de batterie (6) est entourée par un matériau séparateur, et au moins une ouverture de remplissage (5) pour l'électrolyte liquide (2, 11) qui est disposée sur la face supérieure (3) du boîtier (1) ou au moins au-dessus du milieu du boîtier (1) et présentant un électrolyte liquide rempli (2, 11),
**caractérisé en ce que**
le matériau séparateur est dépourvu de taches (8) ou la taille par tache (8) ne dépasse pas 2 cm² ou 3 % de la totalité de la surface du séparateur d'un côté des électrodes de batterie (6).
